# EUROPEAN PATENT SPECIFICATION

(11) **EP 2 345 231 B1**
(45) Date of publication and mention of the grant of the patent: **02.01.2013**
(21) Application number: 09748907.4
(22) Date of filing: 28.10.2009
(51) Int. Cl.: G06F 21/00, H04L 29/12, H04L 29/06

(54) **INTERNETWORKING DOMAIN AND KEY SYSTEM**
VERNETZUNGSDOMÄNEN- UND SCHLÜSSELSYSTEM
MISE EN RELATION DE RÉSEAUX DE DOMAINE ET SYSTÈME DE CLÉ

(30) Priority: 29.10.2008 US 109436 P
(43) Date of publication of application: 20.07.2011
(73) Proprietor: Dolby Laboratories Licensing Corporation, San Francisco, CA 94103-4813 (US)
(72) Inventor: BERNOSKY, Philip J., San Francisco California 94103-4813 (US); STEFFENS, Reinhard R., San Francisco California 94103-4813 (US); DOUGHERTY, James F., San Francisco California 94103-4813 (US)
(74) Representative: Roche, Dermot
(86) International application number: PCT/US2009/062407
(87) International publication number: WO 2010/053790

(56) References cited:
- WO-A1-2008/061344
- WO-A1-2009/102746

## Description

### TECHNOLOGY

The present invention relates generally to networking. More specifically, embodiments of the present invention relate to internetworking domain and key systems.

### BACKGROUND ART

Networking technology and broadband network platforms are developing rapidly and becoming more pervasive. This milieu of connectivity may be used with emerging "connected" consumer and commercial electronics. As used in this context herein, the term "connected electronics" may refer to electronic devices that may both publish and consume digital content (such as encoded media) with other such devices, and from connected devices to the internet and other networks. Security of connected electronics, networks with which they may interconnect, and content that they may publish or consume is typically a related interest.

Patent application WO 2008/061344 describes a kay distribution system that facilitates secure communication between users in different network domains and organizations.

### BRIEF DESCRIPTION OF THE DRAWINGS

The present invention is illustrated by way of example, and not by way of limitation, in the figures of the accompanying drawings and in which like reference numerals refer to similar elements and in which:

FIG. 1 depicts information flow within a first example network structure, according to an embodiment of the present invention;

FIG. 2 depicts information flow with a second example network structure, according to an embodiment of the present invention; and

FIG. 3 depicts an example computer system platform, with which an embodiment of the present invention may be practiced;

FIG. 4 depicts an example content license, according to an embodiment of the present invention;

FIG. 5 depicts an example flow schema for content and license encryption, according to an embodiment of the present invention,

FIG. 6 depicts example user agent service, according to an embodiment of the present invention; and

FIG. 7 and FIG. 8 each depict other example user agents, according to an embodiment of the present invention.

### DESCRIPTION OF EXAMPLE EMBODIMENTS

Internetworking domain and key systems are described herein. In the following description, for the purposes of explanation, numerous specific details are set forth in order to provide a thorough understanding of the present invention. It will be apparent, however, that the present invention may be practiced without these specific details. In other instances, well-known structures and devices are not described in exhaustive detail, in order to avoid unnecessarily occluding, obscuring, or obfuscating the present invention.

Embodiments of the present invention relate to internetworking domain and key systems, which is discussed in Section IV, below. Presented first, example network features and functions and an example computer system platform are respectively described in Sections II and III, to set a context for the description of example internetworking and key systems that follows. This Description of Example Embodiments is thus presented according to the outline, below.

I. Overview;

II. Example Private Internets;

III. Example Computer System Platform;

IV. Domain Key Systems; and

V. Equivalents, Extensions, Alternatives and Miscellaneous.

### I.

### OVERVIEW

Example embodiments described herein relate to internetworking domain and key systems. Example Private Internet: This overview thereof begins with an example private internet milieu, with which the internetworking domain and key systems may function. A dynamic naming service (DNS) component functions privately in relation to a group of client devices, which are each associated with a unique universal resource locator (URL) that is maintained with the DNS component, which privately identifies the client devices within the group. The URL further identifies a hierarchy of private domains that is enforced within the group and which, at least implicitly, represents private relationships therein between the client devices. Network rules are applied over the group based on the private relationships or the private domains. The devices are securely authenticated within the group. A content sharing service component functions with the DNS component to allow one of the client devices within the group to access information content associated with another of the client devices based, at least partially, on the unique URL of the other client device. A private inter-network ("pnet") thus functions, at least a substantially similarly, to an Internet Protocol (IP) based network. The group is securely accessible to group client devices from a network that is external to the group. Moreover, each group client device is freely accessible to each of the other group client devices from within the group.

Embodiments may effectively reduce complexity that may be associated with installing and maintaining home networks, which some general consumers may find technically challenging. For instance, embodiments may obviate the configuration of routers and switches, modems (modulator/demodulators), gateways and the like with Dynamic Host Configuration Protocol (DHCP), IP addresses and Universal Plug and Play (UPnP). DHCP allocates IP addresses dynamically. Dynamic IP address allocation allows reuse (e.g., reassignment upon release) of IP addresses. UPnP allows seamless interconnectivity between some devices and other technologies. Moreover, embodiments readily allow connectivity between a consumer's devices that may be other than physically or logically proximate with respect to the pnet group. For example, group devices in use outside of a consumer's home, remote from an enterprise (or other entity's) locale, beyond the consumer's or enterprise firewall, or otherwise subject to perhaps increasingly impeding security and privacy measures may freely and securely access the pnet group. As used herein, the terms "group devices," "devices of the group," and the like may refer to client devices that comprise familial members of the pnet group.

An embodiment functions with IP, or a similar internet technology based paradigm, to connect devices within a private internet (pnet) and thus essentially obviates exposure of network complexity, while providing significant functionality. Embodiments thus allow access, by connected consumer or commercial electronic devices (e.g., devices that may both publish and consume digital content, such as encoded media, with other such devices, and from connected devices to the global internet and other networks), both inside and outside the home or enterprise, to internet services and to content stored across a group of other connected devices.

In a way that may be somewhat analogous to some functions of IP and other internet technologies that allow personal computers (PCs) to access websites via servers, an embodiment functions inherently globally and across various network topologies to interconnect the group of devices, access content from other group devices, and from the global internet and other networks. As used herein, the term "global internet" may refer to the large internetwork of various networks which, on a world wide scale, supports access to the World Wide Web (www). Thus, the term global internet may herein contrast with the pnet, which privately interconnects devices of the group.

Embodiments relate to establishing consumer or enterprise created "private internets" that may use technologies that are at least similar to those used with the global internet. However, embodiments relate to application of these "internet technologies" over a group of connected devices in a private internet. As used herein, the term "private internet" or pnet may refer to a closed internet type domain; a closed, private domain of private devices that freely interconnect using IP (or an essentially similar protocol).

An embodiment relates to a method of identity that inherently represents ownership and familial relationships. Thus, an embodiment simplifies sharing of content, which may be commercial and/or private information, between group devices of the pnet. Such content sharing may be referred to herein as "legitimate." While fully supporting legitimate content sharing within the pnet group however, the embodiment impedes the illegitimate (e.g., perhaps illegal or actionable) sharing of content.

An embodiment relates to a method of device and/or user authentication that significantly simplifies the interconnection of group devices. Moreover, an embodiment relates to a method of securely authenticating and connecting devices with the group from outside the local network, while freely allowing one group device to access another group device from within the pnet.

Example Internetworking and Domain Key System: The example private internet milieu thus described may function with an internetworking domain and key system, which promotes security of the network, for the devices interconnected therewith, and for the content that the interconnected devices may publish or consume. An embodiment relates to an internetworking domain and key system, which provides trust between the various levels of a private internet milieu and allows content protection techniques that are based, at least in part, thereon. For example, an established private top-level domain (e.g., jones.net) may instantiate users and devices as sub-domains, which are hierarchically related to the top-level domain (e.g., Jones family's TV: tv.jones.net; Tom Jones' mp3 player: "mp3.tom.jones.net." This allows derivations, which may be used in familiar ways, e.g., browsing the private or global internet. An example embodiment provides security over this milieu, to the network, its hierarchical structure (hierarchy), devices interconnected therein and content that is produced and/or consumed therewith with a key system that conforms to the network hierarchy.

The key system provides security features that may include protection of content, and authentication of source or destination, and any node in the hierarchy must be provided. An embodiment may function with a system that configures a public key infrastructure (PKI). The PKI system maintains trust throughout the private internet, to promote security over the hierarchy.

At the top of the private internetwork hierarchy, a PKI Certificate Authority (CA) is established. The CA configures a trust chain within the private internet (pnet) hierarchy and represents the highest level of trust available throughout the hierarchy. An instantiation of this top-level node functions as a Root Certificate (RC). The RC is associated with the top-level domain name in the pnet. Domain names may be resolved to locations within the pnet, which allows that domain name may be used to access the CA and confirm identity at that node in the pnet hierarchy. Thus in the Jones family example, the root authority is the family "Jones," and the top-level domain may be based on that family name. Within the pnet, the RC is thus associated with the "Jones" CA. In an embodiment, representation of a network node location, its identity and position within the hierarchy, and a corresponding trust level, e.g., within the pnet, is thus associated with a single, simple name such as a URL or its associated "nickname" (e.g., "jones").

The CA may generate child certificates, e.g., for each of the Jones family members or other users. The derivation of each child certificate from the parent certificate allows verification of the relationship of trust, using the CA. For example, each child certificate is associated with a sub-domain of the Jones family domain "jones.net," e.g., "tom.jones.net" and "jane.jones.net" may correspond to hypothetical users Tom Jones and Jane Jones, respectively. While sub-domains may have some inherent level of trust because they are members of the pnet "jones.net," an embodiment increases the trust level of each sub-domain significantly, because their relationships may be substantiated through the parent top-level domain with the PKI infrastructure. Each sub-domain has a certificate and authentication engine, which allows subsequent children to this level to be found and authenticated with equal ease. The hierarchy is extensible, substantially without limit. An embodiment is thus scalable over a spectrum of network domain sizes.

For example, each of a user's CE devices may form a subsequent level of the hierarchy, e.g., Tom Jones' MP3 player domain is instantiated as "mp3.tom.jones.net," and a certificate is created for the new sub-domain from the certificate held by the sub-domain node "tom.jones." Trust level at any point in the hierarchy is directly related to the level of authentication that is utilized when handing over child certificates. To keep the highest level of trust throughout the system, the highest level of authentication is used. EMA's domain PKI infrastructure promotes high level trust by providing the address of the parent, and can be followed up all the way to the CA. Moreover, each node can institute its own authentication, e.g., devices may institute password or biometric authentication to an end-user to ensure trust.

An embodiment functions with a multi-chain parallel key certificate hierarchy, in which the multiple paths may effectively be interlinked with each other. Any given certificate of all hierarchies contains both public and private elements, as well as other, trusted and un-trusted elements. While traversing the Domain hierarchy from the RC to an end-point (e.g., mp3player.tom.jones.net) or vice versa, trust and authenticity are readily verified in a vertical sense within the pnet. However, traversing the pnet and any of multiple other hierarchies provides further security, which may function in an embodiment to confirm the integrity of certificates.

For example, a manufacturer of an MP3 player that is associated with the mp3player.tom.jones.net sub-domain may include certain certificates with the MP3 player, which may include rights to consume (e.g., access, share, copy) certain media content instances. The manufacturer's certificates associated with each of the interconnected devices within the pnet may be shared with the CA thereof, which may function to allocate access to that content with other sub-domains within the pnet according to the hierarchy enforced therein and subject to authentication by the key hierarchy associated therewith. Within the CAs that are associated with the manufacturers of CE devices, the rights of mp3player.tom.jones.net to access content, download upgrades or patches or the like may be allocated based on the hierarchy enforced therein.

Also for example, the hypothetical user Tom Jones may use the MP3 player associated with the sub-domain mp3player.tom.jones.net in networks outside of the pnet jones.net, e.g., at another location such as a business. In joining another hierarchical network, the Tom Jones' MP3 player may becomes a sub-net of that network, with a URL that differs from that with which it is associated in pnet jones.net. The access rights the MP3 player may enjoy in the second network is based, at least in part, on the certificate it holds that is issued by the CA associated therein. Where Tom Jones' MP3 player is connected in the second network, it may still communicatively contact and link with the pnet jones.net. However, the access rights that it enjoys therein, while based on part on the pnet jones.net CA, may now also be based on its certificate within the second network. Thus, an embodiment may enforce security within a pnet, in a sense, "vertically" with respect to its own CA, as well as "horizontally" reinforcing security, with respect to the parallel CA of other networks.

### II.

### EXAMPLE PRIVATE INTERNETWORKS

### A. EXAMPLE NETWORK FEATURES AND FUNCTIONS

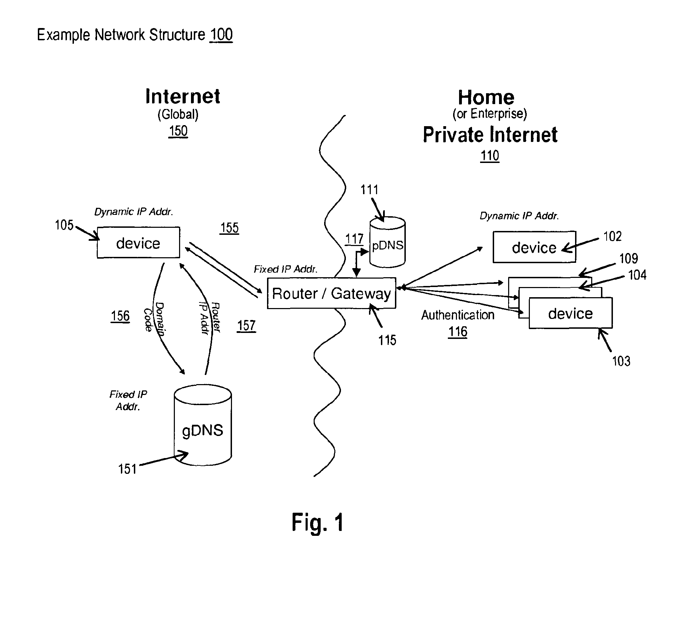

FIG. 1 depicts information flow within a first example network structure 100, according to an embodiment of the present invention. An embodiment relates to creating a "private internet" (pnet) 110 between a group of devices. The pnet 110 may be physically or logically proximate to a user's home or the locale of an enterprise or other entity associated with pnet 110. The pnet 110 may include virtually any number of devices, which are represented herein by the depicted devices 102, 103, 104, 105 and 109. As used herein, the term "group of devices" may refer to a family of consumer or commercial electronic devices. The term may further imply a relationship between the devices that may correspond to common, allied or entity based associations between one or more users of the devices. The pnet 100 may be considered a system for allowing each of its associated group devices to access one another and to access information content associated with each.

An embodiment uses methods that relate to IP or similar protocols and related technologies, such as those with which the global internet and world-wide web function. Thus, network setup and maintenance within the group may benefit from the familiarity, simplicity, and inherently global scope of internet based technology. Group devices each have a unique URL associated therewith, discover each other through DNS servers, and automatically and/or adaptively route information flow 100, both inside and outside the home or enterprise using methods that may be similar or analogous to those with which the global internet functions.

For instance, using the existing global internet as an illustration, URL and IP addresses allow various "domains" of the global internet to be expressed, rendered or described in natural language terms such as simple English. A URL associated with a certain domain may be resolved to an IP address that is unique on the global internet with a world-wide master directory function of a global DNS. The URL "http://www.dolby.com," "www.dolby.com," or "dolby.com", for example is associated through a global DNS with the IP address that corresponds to a webpage document, which is rendered in Hyper Text Markup Language (HTML) and is associated with a corporation entity known as "Dolby Laboratories, Inc.

When a user of the global internet enters such a natural language URL, e.g., enters appropriate text typed alphanumerically (or ideographically) into an browser input field, which itself may be appropriately configured with a graphical user interface (GUI), technology associated with the global internet resolves that URL to a specific server at a specific address on a specific network. Useful information may be accessed therefrom. The user experience is simple, effective, generally positive, seamless and transparent. For instance, while virtually all users may benefit from the convenience of retrieving information in this manner, many users may be substantially unaware of (nor consciously responsible for) the underlying technology that was used to return their document from the URL they entered.

An embodiment has a private DNS (pDNS) component 111. The pDNS component 101 may comprise a system, device or service that allows a user, consumer, enterprise or other entity associated with pnet 110 to create a private list of private group devices, including for example devices 102, 103, 104, 105 and 109. Each of the devices on the private list has a corresponding unique private URL (pURL). The pDNS component 111 maintains the private pURL list and provides information 117 relating to the pURLs of pnet 110 to a router/gateway (or similarly functional networking entity; e.g., switch) 115. While FIG. 1 depicts structure 100 as associated with dynamic IP addressing, it should be appreciated that embodiments are well suited to function with static IP addressing.

With queries to pDNS component 111 and correspondingly returned pURL information 117, router/gateway 115 performs translation and routing functions 116 that relate to authenticating and interconnecting the private devices, including example devices 102, 103, 104, 105 and 109. Device names and labels within the pnet may be easily assigned, read and understood by mainstream consumers and professionals, alike, because their nomenclature is substantially similar to that of the generally familiar URL, as used on global internet 150. Using IP like protocols, the underlying network technology operant within pnet 110 may not be apparent to a user's experience, but is efficiently and effectively used by router/gateway 115 in performing its routing and translation functions.

Moreover, the private nature of pDNS component 111 accords a measure of security. For instance, while router/gateway 115 functions to communicatively couple and network pnet 110 with the global internet 150 (and possibly other networks and internetworks), no IP address, URL, pURL or private IP address associated with pDNS component 111 or any of the private group devices are exposed over global internet 150.

A hierarchy of sub-domains is maintained within pnet 110. The sub-domains may represent ownership and relationships. For instance, a user family or other entity could choose a "root domain" name that is based on their last name. For a hypothetical example "Doe" family, users and devices associated with that group may be represented with the example pURL: http://doe.net. Potential conflicts with domain names on the global internet are substantially irrelevant. The private domain name relates to a private internet. The pnet may be substantially opaque from the perspective of the global internet and pURLs associated with the pnet may substantially invisible, undetectable or essentially meaningless thereto.

Members of the group, such as members of the hypothetical example Doe family herein, may access the pnet with which they are associated. Within the family or other group, sub-domains may be created. For the example, hypothetical users "Jane" and John" associated with the Doe family may respectively configure unique sub-domains, such as may conform to the hypothetical example pURLs: 'http://jane.doe.net' and 'http://john.doe.net'. While sub-domains may be unique, an implied familial relationship may be inferred from the "jane" and "john" sub-domains because they are both sub-domains that belong to the same "Doe" family domain.

Moreover, devices may also represent sub-domains. In the example of the hypothetical Doe family members, Jane may use a device such as an Ipod^{™} (a product line available from Apple Computers, a corporation in Cupertino, California) and John may use a device such as a Zune^{™} (a product line available with Microsoft, a corporation in Redland, Washington). These devices may respectively correspond to the hypothetical example pURLs: 'http://ipod.jane.doe.net' and 'http://zune.john.doe.net'. Ownership and familial relationships may be inferred between the devices as for instance, from the relationship to the root domain "doe.net," and personal domains (e.g., "john" and "jane").

### B. EXAMPLE SHARING AND SECURITY FEATURES

Content transfer rules may be enforced within pnet 100. Various content transfer rules may be enforced. Some transfer rules may be generally applicable within pnet 100. For example, a commercial or other provider or proprietary or copyright protected content may specify transfer rules that follow (or are otherwise associated with) particular content. A general content rule associated with a particular movie or musical album may specify a fair use policy applicable thereto, which would be applied generally within pnet 100 with respect to that particular content. The rule may allow transfer of that content from a device associated with a particular user to: (1) another device associated with only that user, (2) a certain number of times (e.g., thus asserting control of a number of instances of the content the user may transfer or duplicate), or (3) freely.

Other transfer rules may be applicable with somewhat more specificity within pnet 100. For instance, within pnet 100, with its pDNS and pURL naming features, content stored on any of the group devices may be freely accessed from any of the other group devices. The content may be accessed, for instance, with a simple user input. The user input enters a pURL that specifies an appropriate device of the group, as well as content stored therewith that is desired for access. For example, a hypothetical pURL may specify a movie title, a video identifier, or another content designator stored with a specified device. For example, a hypothetical pURL: 'http://ipod.jane.doe.net/starwars.mp4' may specifically represent an example movie, encoded with the MPEG-4 codec and having the title "Starwars," located on an iPod^{™} device that belongs to (or is otherwise associated with) the example user Jane of the hypothetical Doe family.

The pDNS component 111 maintains the list of pURLs and functions with router/gateway 115 to resolve IP address and routing issues, which are internal with respect to pnet 110. Upon resolving the IP address and routing the request and information between an input group device (e.g., device 102) and a target device that corresponds to the entered pURL within pnet 110 (e.g., the pURL ' http://ipod.jane.doe.net ' may correspond to example device 103), the information specified with the pURL (e.g., 'starwars.mp4') is retrieved from target device 103 and returned to input device 102. Users of pnet 110 however, not unlike users of the global internet 150, may remain essentially unaware and unconcerned about the hidden technical complexities effectuating the retrieval of the information they desire from other group devices therein. Users of pnet 110, in contrast, may simply be pleased, relieved or convenienced by the experience, which should substantially resemble their familiar information retrieval experiences with the global internet 150. Router/gateway 115 may provide content sharing services between the group devices of pnet 110.

The pURL naming features and private IP addresses of pnet 110 effectuate security and privacy features therein that effectively "lock down" protected content within the network, while freely allowing access, retrieval and exchange of content between group devices thereof. Privacy and security are thus enhanced, while fair use and similar positive information exchange paradigms are fully supported. In an embodiment, the pURLs essentially represent a family (or similar or analogous) relationship between the group of devices. Networking logic associated with router/gateway 115 effectively restricts or enables a flow of content between devices based on their relationship within the hierarchy of domains and sub-domains.

For example, commercial content providers may specify that content they provide is allowed to be shared with (e.g., stored on) any device that is owned by a single person. Additionally or alternatively, content providers may specify that content they provide is allowed to be shared with any device owned within a family. Such specifications may be enforced with rules that are germane to pnet 110 and easily managed by network logic within the domain, e.g., with which router/gateway 115 functions in view of information 117. Private content may be allowed, by the network logic operant within pnet 100, for sharing and transfer between any devices within the family. Moreover, some content may be allowed for sharing with other family domains, while the other domains may be restricted from sharing content beyond a personal domain associated with their own corresponding pnet.

### C. EXAMPLE CONNECTIVITY FEATURES

Embodiments may also simplify user connectivity within pnet 100 upon establishing devices within the private domain. For instance, upon purchases or acquisition of a new device for inclusion in their pnet 100, users may simply initialize or power the device on to effectuate connectivity (e.g., establish communicative and networking coupling of the device) within the personal network. In an embodiment, an initializing device requests a pURL corresponding to its owner (e.g., for the hypothetical user "John Doe," use of the correspondingly appropriate pURL john.doe.net') may effectuate connectivity. The device contacts the pDNS component (e.g., server) 111, which requests authentication.

Authentication may be effectuated with password entry, biometric conformance, challenge interrogatory replies, other responsive mechanisms, or other means. Upon authentication, the pDNS component may assign or maintain a unique pURL that corresponds to the device. For example, hypothetical user John Doe's third iPod^{™} device, upon authentication in pnet 110, may be associated with the example pURL: 'ipod3.john.doe.net'.

An authenticated assignment securely establishes a private IP address and associated routing information within a database (or other DNS information repository) associated with pDNS component 111. Thus, the initialized device attains access the DNS database of pDNS server 111 and may use information retrieved therefrom to discover related devices within pnet 100. Concomitantly, router/gateway 115 may provide or use associated routing information to handle communications traffic between the authenticated initialized device and the other devices of pnet 110.

Thus, embodiments may effectively utilize well established URL identification paradigms. For instance, an embodiment may function in substantial compliance or conformance with available OpenID internet specifications, such as those that may be promulgated in various requests for comment (RFC) of the Internet Engineering Task Force (IETF), to effectuate the formation and specification of relationships through essentially private URL sub-domains, as designated with the pURLs.

An embodiment implements identity, at least initially, at the root domain. For example, the root domain in the hypothetical pURLs herein is the syntax corresponding to the 'doe.net' portion of the pURL (the '.net' syntax corresponding to that which is sometimes referred to as a "top level," "first level," or "'primary' domain name"). Devices seeking to gain authentication into the private network 'doe.net' domain may simply derive the authentication address from the root domain. For instance, the pnet 100 private domain may implement OpenID identity over the pURL 'openid.doe.net'. Thus, devices seeking authentication in pnet 110 may simply refer to that particular pURL. Upon authenticating into the pnet 110 domain, the initializing device may freely gain connectivity to the other devices thereof.

### D. EXAMPLE PRIVATE INTERNET ACCESS VIA EXTERNAL NETWORKS

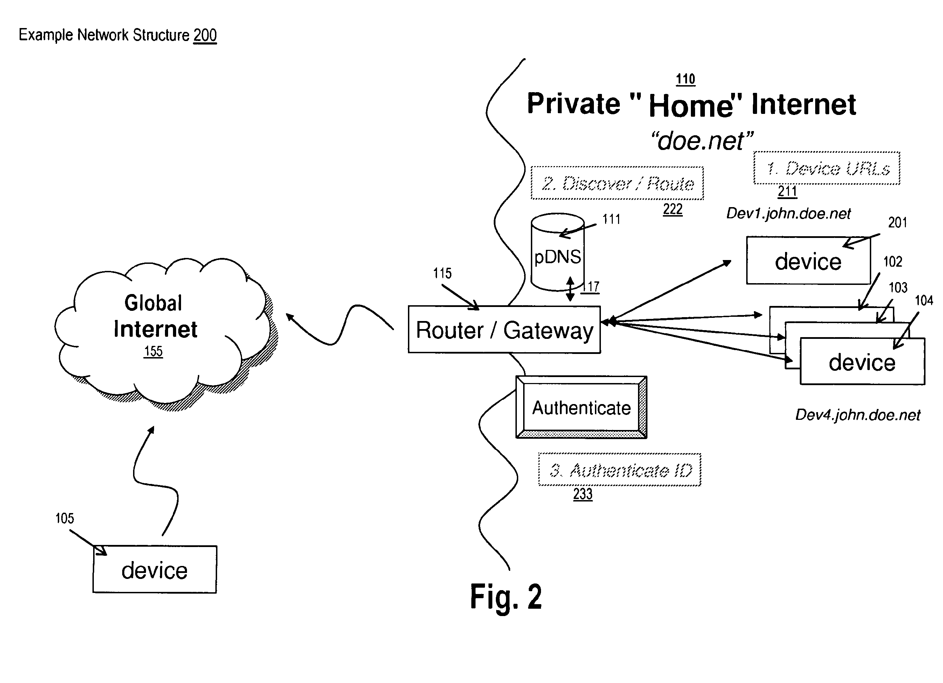

FIG. 2 depicts information flow within second example network structure 200, according to an embodiment of the present invention. Group devices may securely connect to the private internet from a physical or logical locale other than proximate thereto. For instance, group device 105 may connect to pnet 100 from outside its local network and/or outside the home, enterprise or other entity hosting, deploying or otherwise associated with pnet 100. Group devices external to pnet 100 may connect therewith via an external network, which may include the global internet 155.

An embodiment effectuates connection of externally disposed group devices (e.g., device 105) for accessing the private domain. Device 105 authenticates with the pDNS 111 identity server via global internet 155 and router/gateway 115, and essentially proxies into the local network of pnet 100. Alternatively or additionally, device 105 may proxy into pnet 100 via direct or intermediate connection with another group device of the "doe.net" family of devices that is also physically or logically situated external to pnet 100, but is already communicatively coupled and authenticated into its local network. For example, device 105 may communicatively couple with another group device that, while also external to pnet 100, is already connected (communicatively coupled and authenticated) thereto via global internet 155 and router/gateway 115.

An embodiment may use two sets of unique codes, for use as secure, distinct identifiers. The unique codes or identifiers may include randomly generated code, hash codes, digital certificates, and cryptographic key exchange modalities. For instance, key exchange procedures may be implemented, at least in part, per one or more of the IPsec (Internet Protocol Security) IKE (Internet Key Exchange), ISAKMP (Internet Security Association and Key Management Protocol) and/or related internet standards and protocols. An embodiment may use various methods for generating unique identifiers.

In an embodiment, a domain code is generated and/or assigned upon creating the private root domain (e.g., the 'doe.net' root domain). The domain code may be both unique from a global perspective and specific to the private domain associated with pnet 100. Multiple private domains may exist that have the same natural language root domain designation. For example, more than one domain (perhaps many) may share the same root domain identifier "doe.net." Notwithstanding this apparent, yet essentially superficial similarity however, each private internet domain corresponds to a globally unique domain code. Importantly, the unique domain codes allow the private internet domains to be distinguished and differentiated one from another from outside of their respective private domains.

An embodiment generates a second set of codes for each group device. For instance, upon authenticating a new device into pnet 110, "device specific code" is created and/or assigned that specifically corresponds to the authenticating device and that is unique within the private domain. Importantly, the domain code combined with the device specific code represent an identifier for a given group device that maintains its unique specificity globally, e.g., from the perspective of users and devices in other networks external to pnet 100 and from the global internet 155.

Thus, group devices, while other than physically or logically proximate to, or within the boundaries of the local network hosting pnet 110 may securely connect thereto via global internet 155. Myriad external locales exist from which a "Doe family" user (or member of an enterprise or other entity that may similarly be considered in a familial or relatedness context) may attempt to connect with pnet 110. The global internet 155 may be accessed, for example, from coffee shops, pubs, a consumer's place of business, a friend's house, public transport modes and hubs. Via the public global internet 155, pnet 110 may be securely accessed from any of its externally disposed group devices.

Embodiments simplify authentication and connectivity, which could otherwise be complicated by consumer broadband issues, such as the dynamic nature of IP addresses that may apply to the consumer's home, the existence of firewalls and other security strictures and structures, and network address translation within a consumer's router. Embodiments thus provide a dynamic system for contacting the private internet, authenticating and communicating and exchanging information therewith notwithstanding such issues.

An embodiment effectuates an internet service for resolving the domain code described herein to a private IP address of the relevant private DNS network (e.g., pnet 100). For instance, pDNS server 111 occasionally, periodically, or responsively contacts dynamic global DNS service 151 (FIG. 1) associated with global internet 155 and ensures that current global IP addresses, needed for global contacting private internets, are available. Importantly, embodiments use the essentially hidden domain code to address the private domain of pnet 110. The domain code effectively hides the private domain name ('doe.net') from the public dynamic global DNS service 151, thus providing an additional layer of security. While FIG. 2 depicts structure 200 as associated with dynamic IP addressing, it should be appreciated that embodiments are well suited to function with static IP addressing.

Upon discovering the global IP address of the user's private domain pnet 100, the private, external group device 105 may contact the user's pDNS server 111 (e.g., via global internet 155 and router/gateway 115) to authenticate and ultimately gain access to the local network through proxy functions provided by pDNS 111. In an embodiment, authenticating device 105 uses both the domain code and the device specific code, e.g., the domain name ('doe.net') and the authenticating password or other security mechanism. Defense in depth is accorded by several layers of security, which may deter hackers, content thieves and other black hats, network rogues and modern day malefactors.

Importantly, the referral mechanism used with embodiments herein maintains authentication as a function of components of the private pnet 100 domain. This limits exposure of other identity and authentication data to the overall global internet 155. While the domain code may be exposed to global internet 155, the domain name ('doe.net'), group device names and group device codes remain private and essentially hidden. Thus, the group device names and group device codes required for authentication and access are not exposed or available on global internet 155.

Within network structure 200, a procedure for interconnecting group devices may thus operate. In step 211, pURLs associated with each of the group devices are generated. For example, hypothetical pURL 'Dev1.john.doe.net' may correspond to group device 201 and pURL 'Dev4.john.doe.net' may correspond to group device 104. Upon external group device 105 attempting to connect with pnet 100 to access information associated with group devices 201, 102, 103 or 104 using the domain code, its group membership is discovered and private routing information privately derived or retrieved within pnet 110 in step 222. In step 233, device 105 is authenticated with its own device code, which may be encrypted. Upon authentication, device 105 may freely function within pnet 110, although it may remain physically of logically other than proximate thereto and may securely access information associated with the other group devices 201, 102, 103 and 104.

### III.

### EXAMPLE COMPUTER SYSTEM PLATFORM

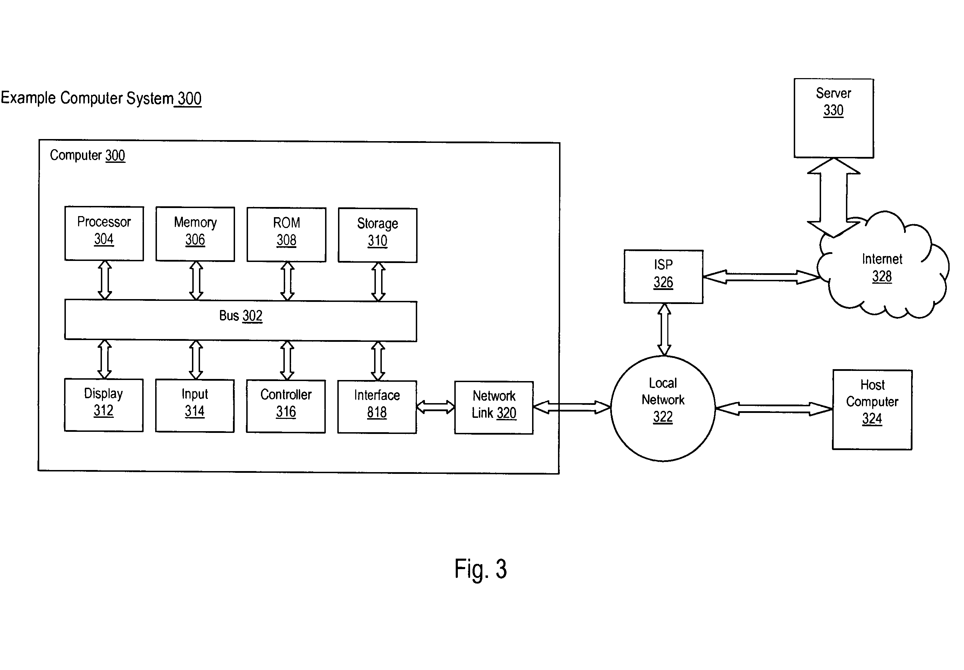

FIG. 3 depicts an example computer system platform 300, with which an embodiment of the present invention may be implemented. Computer system 300 includes a bus 302 or other communication mechanism for communicating information, and a processor 304 coupled with bus 302 for processing information. Computer system 300 also includes a main memory 306, such as a random access memory (RAM) or other dynamic storage device, coupled to bus 302 for storing information and instructions to be executed by processor 304. Main memory 306 also may be used for storing temporary variables or other intermediate information during execution of instructions to be executed by processor 304. Computer system 300 further includes a read only memory (ROM) 308 or other static storage device coupled to bus 302 for storing static information and instructions for processor 304. A storage device 310, such as a magnetic disk or optical disk, is provided and coupled to bus 302 for storing information and instructions.

Computer system 300 may be coupled via bus 302 to a display 312, such as a liquid crystal display (LCD), cathode ray tube (CRT) or the like, for displaying information to a computer user. An input device 314, including alphanumeric and other keys, is coupled to bus 302 for communicating information and command selections to processor 304. Another type of user input device is cursor control 316, such as a mouse, a trackball, or cursor direction keys for communicating direction information and command selections to processor 304 and for controlling cursor movement on display 312. This input device typically has two degrees of freedom in two axes, a first axis (e.g., x) and a second axis (e.g., y), that allows the device to specify positions in a plane.

The invention is related to the use of computer system 300 for associating information with media content. According to one embodiment of the invention, internetworking devices is provided by computer system 300 in response to processor 304 executing one or more sequences of one or more instructions contained in main memory 306. Such instructions may be read into main memory 306 from another computer-readable medium, such as storage device 310. Execution of the sequences of instructions contained in main memory 306 causes processor 304 to perform the process steps described herein. One or more processors in a multi-processing arrangement may also be employed to execute the sequences of instructions contained in main memory 306. In alternative embodiments, hardwired circuitry may be used in place of or in combination with software instructions to implement the invention. Thus, embodiments of the invention are not limited to any specific combination of hardware circuitry and software.

The term "computer-readable medium" as used herein refers to any medium that participates in providing instructions to processor 304 for execution. Such a medium may take many forms, including but not limited to, non-volatile media, volatile media, and transmission media. Non-volatile media includes, for example, optical or magnetic disks, such as storage device 310. Volatile media includes dynamic memory, such as main memory 306. Transmission media includes coaxial cables, copper wire and other conductors and fiber optics, including the wires that comprise bus 302. Transmission media can also take the form of acoustic or light waves, such as those generated during radio wave and infrared data communications.

Common forms of computer-readable media include, for example, a floppy disk, a flexible disk, hard disk, magnetic tape, or any other magnetic medium, a CD-ROM, any other optical medium, punch cards, paper tape, any other legacy or other physical medium with patterns of holes, a RAM, a PROM, and EPROM, a FLASH-EPROM, any other memory chip or cartridge, a carrier wave as described hereinafter, or any other medium from which a computer can read.

Various forms of computer readable media may be involved in carrying one or more sequences of one or more instructions to processor 304 for execution. For example, the instructions may initially be carried on a magnetic disk of a remote computer. The remote computer can load the instructions into its dynamic memory and send the instructions over a telephone line using a modem. A modem local to computer system 300 can receive the data on the telephone line and use an infrared transmitter to convert the data to an infrared signal. An infrared detector coupled to bus 302 can receive the data carried in the infrared signal and place the data on bus 302. Bus 302 carries the data to main memory 306, from which processor 304 retrieves and executes the instructions. The instructions received by main memory 306 may optionally be stored on storage device 310 either before or after execution by processor 304.

Computer system 300 also includes a communication interface 318 coupled to bus 302. Communication interface 318 provides a two-way data communication coupling to a network link 320 that is connected to a local network 322. For example, communication interface 318 may be an integrated services digital network (ISDN) card or a digital subscriber line (DSL), cable or other modem to provide a data communication connection to a corresponding type of telephone line. As another example, communication interface 318 may be a local area network (LAN) card to provide a data communication connection to a compatible LAN. Wireless links may also be implemented. In any such implementation, communication interface 318 8 sends and receives electrical, electromagnetic or optical signals that carry digital data streams representing various types of information.

Network link 320 typically provides data communication through one or more networks to other data devices. For example, network link 320 may provide a connection through local network 322 to a host computer 324 or to data equipment operated by an Internet Service Provider (ISP) 326 (e.g., for the global internet 155; FIG. 1, 2). ISP 326 in turn provides data communication services through the worldwide packet data communication network now commonly referred to as the "Internet" 328 (e.g., which may be identified with or represent global internet 155; FIG. 1, 2). Local network 322 and Global Internet 328 both use electrical, electromagnetic or optical signals that carry digital data streams. The private internet described herein (e.g., pnet 110; FIG. 1, 2) may also use such signals. The signals through the various networks and the signals on network link 320 and through communication interface 318, which carry the digital data to and from computer system 300, are exemplary forms of carrier waves transporting the information.

Computer system 300 can send messages and receive data, including program code, through the network(s), network link 320 and communication interface 318. In the Global Internet example, a server 330 might transmit a requested code for an application program through Global Internet 328, ISP 326, local network 322 and communication interface 318. In accordance with the invention, one such downloaded application provides for internetworking devices, as described herein.

The received code may be executed by processor 304 as it is received, and/or stored in storage device 310, or other non-volatile storage for later execution. In this manner, computer system 300 may obtain application code in the form of a carrier wave.

Computer system 300 may represent various computers, computerized communicating and networking devices, entertainment, media reproduction, and gaming devices, and other electronic and digital apparatus. Computer system 300 may thus represent a personal computer (PC) and similar computers (workstations, Apple^{™} and Linux based computers) of various types, portability characteristics and form factors that may include (but are not limited to) desktops, laptops, handhelds, personal digital assistants (PDAs), cellular telephones, media (e.g., MP3 and/or other codecs or formats) players, game related devices and the like.

While embodiments have been described in relation to effectuation with a computer system, it should be appreciated that embodiments may also be implemented with circuits and devices such as an integrated circuit (IC). Embodiments may function with ICs that include (but not limited to) an application specific IC (ASIC), a microcontroller, a field programmable gate array (FPGA) or a programmable logic device (PLD). Internetworking functionality associated with embodiments may accrue to aspects of the structure and design of devices such as ASICs. Alternatively or additionally, internetworking functionality may be effectuated with programming instructions, logic states, and/or logical gate configurations applied to programmable ICs, such as microcontrollers, PLDs and FPGAs.

### IV.

### INTERNETWORKING DOMAIN AND KEY SYSTEM

Embodiments of the present invention relate to an internetworking domain and key system. The example network features and functions and example computer system platform, which were are respectively described in Sections II and III, set a context for describing an example internetworking domain and key system, according to an embodiment.

An example embodiment may be implemented with industry standard or other cryptographic technology, persistent content encryption, and encrypted content licenses. A key system such as a PKI trust hierarchy may function in a network milieu such as described above in Section II in relation to the example pnet domain hierarchy to provide robust, reliable and seamless security to the network, its domain hierarchy, devices interconnected therewith, and content that is produced or consumed therein. In an embodiment, traversing the Domain hierarchy from the RC to an end-point (e.g., the mp3player.tom.jones.net) or vice versa, trust and authenticity are readily verified in a vertical sense within the pnet domain hierarchy. Moreover, traversing the pnet and any of multiple other hierarchies provides further security, which may function in an embodiment to confirm the integrity of certificates.

For example, a manufacturer of an MP3 player that is associated with the (e.g., hypothetical) mp3player.tom.jones.net sub-domain may include certain certificates with the MP3 player, which may include rights to consume (e.g., access, share, copy) certain media content instances. The manufacturer's certificates associated with each of the interconnected devices within the pnet may be shared with the CA thereof, which may function to allocate access to that content with other sub-domains within the pnet according to the hierarchy enforced therein and subject to authentication by the key hierarchy associated therewith. Within the CAs that are associated with the manufacturers of CE devices, the rights of mp3player.tom.jones.net to access content, download upgrades or patches or the like may be allocated based on the hierarchy enforced therein.

Also for example, the hypothetical user Tom Jones may use the MP3 player associated with the sub-domain mp3player.tom.jones.net in networks outside of the pnet jones.net, e.g., at another location such as a business. In joining another hierarchical network, the Tom Jones' MP3 player may becomes a sub-net of that network, with a URL that differs from that with which it is associated in pnet jones.net. The access rights the MP3 player may enjoy in the second network is based, at least in part, on the certificate it holds that is issued by the CA associated therein. Where Tom Jones' MP3 player is connected in the second network, it may still communicatively contact and link with the pnet jones.net. However, the access rights that it enjoys therein, while based on part on the pnet jones.net CA, may now also be based on its certificate within the second network. Thus, an embodiment may enforce security within a pnet, in a sense, "vertically" with respect to its own CA, as well as "horizontally" reinforcing security, with respect to the parallel CA of other networks.

An embodiment may implement persistent content encryption with an industry consensus or other cipher. Decryption keys may be embedded in a content license and stored in an encrypted format. Based on membership in a pnet domain hierarchy, decryption of the encrypted license grants access to the embedded content decryption keys, which allows secure content decryption. Access, copy sharing and other rights associated with a particular content item are expressed in the content license in a rights expression language. Cryptographic elements described herein may function with various DRM and CPCM systems. Embodiments may be implemented using one or more ciphers.

Pursuant to licenses or subject to constraints and the like that may correspond to usage rules for particular media content, which may typically be assigned by the content's provider, content is protected within the internetworking domain and key system with persistent encryption to enforce of the usage rules. Rights may change from one instance of content to another. Embodiments may function independent of trans-encrypting (e.g., decrypting and subsequent by essentially instantaneous, secure re-encryption), which allows for rights change over multiple content instances. An embodiment functions to preserve the original encryption keys. However, a content license associated with the domain may be re-encrypted to include the modified usage rights. Thus, if a content instance changes its state, an embodiment preserves its original content encryption.

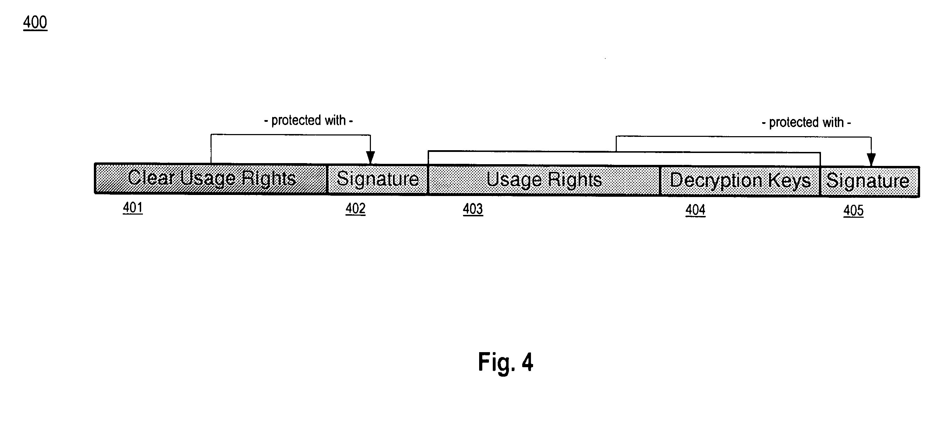

Example Content License: FIG. 4 depicts an example content license 400, according to an embodiment of the present invention. Content license 400 has a clear text version 401 with protected usage rights 403, and an encrypted and protected content decryption keys 404. The clear text part 401 of the license may express usage rights, and is protected against alteration with a digital signature mechanism 402. This allows for signaling the associated rights, even if the content can not be played without obtaining an updated license. Encrypted content decryption keys 403, and backup copy 404 of the usage rights are also protected against alteration with a digital signature 405.

In an embodiment, content license 400 may express rights associated to a particular instance of content through the use of a rights expression language. The rights thus expressed in the content license are modeled to reflect a wide range of actions, potential applications and business models, such as those in Table 1, below.

**TABLE 1**

| | |
|---|---|
| View | |
| Record | |
| Tethered control | |
| Alternative rights if tether is unavailable | |
| Gifting | |
| Share with other Domain | |
| Re-encode to different (lower) bitrate | |
| Derivative Works (yes / no statement) | |
| Interface protection (Macrovision, HDCP, analogue off) | |
| Derived attributes (e.g., per business models): | |
| | Time window |
| | Content integrity |
| | Export to other protection schema (e.g., CSS, AACS) |
| Content Business model aspects: | |
| Sell-through (buy-out) | |
| Subscription | |
| Rental | |
| Add-supported | |
| Creative Commons | |
| User Generated Content | |
| Burn to protected physical media (e.g., DVD, BD) | |
| Burn to unprotected physical media (e.g., CD) | |

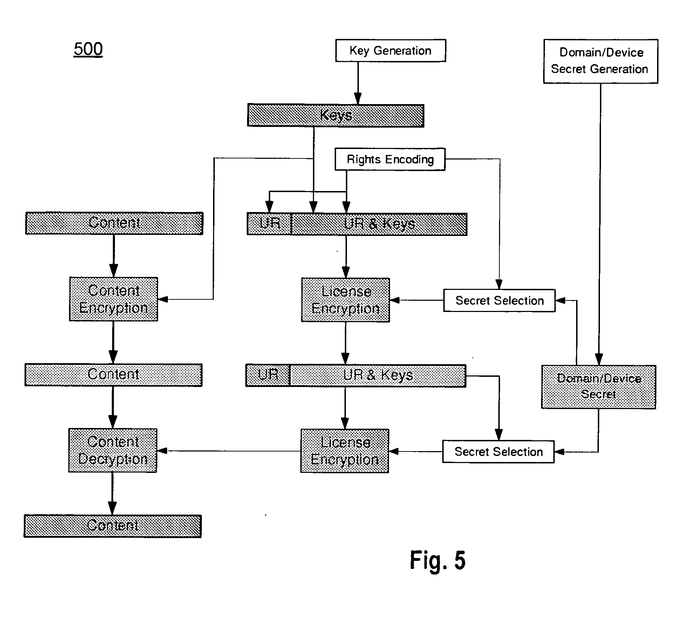

FIG. 5 depicts an example flow schema 500 for content and license encryption, according to an embodiment of the present invention. Example Device Certificate: In an embodiment, devices (e.g., CE) that are (or may be) interconnected in a pnet domain or similarly hierarchical network have a trusted device certificate, issued at or near manufacture time by their makers. The device certificate includes a public/private key pair, which is unique to each device. The public part of the device certificate is secured against alteration by the means of a signature, while the private part is secured against alteration by a signature and a kept secret. Based on this certificate, a pnet interconnected device securely and uniquely identifies itself to the pnet hierarchy, and based on the private key and asymmetric encryption, protects other certificates.

Example Domain Membership: Based on the embedded device certificate, a pnet domain interconnected device registers with a domain controller of the pnet domain. An embodiment may function with multiple domain controllers, e.g., to avoid single point of failures. Moreover, the domain controller may reside at different levels of the pnet domain hierarchy. For example, the domain controller may be either comprise an integral part of a user's domain (e.g., a physical device such as the MP3 player associated with sub-domain mp3player.tom.jones.net), or a service (e.g. managing a consumers domain from the Internet with a logical device) executing therewith. Example flow schema 500 allows content binding and domain management.

Example Content Binding: An embodiment assigns decryption on a content license to, and allows access to protected content, at various stages of the domain hierarchy. At a given level of the domain key hierarchy, content within the system may be bound to a registrar, a domain, a person within a domain, devices associated with a person within the domain, a device within the domain, and/or temporal domain members, such as families and friends of persons within the domain.

Example Domain Management Scenarios: For a first solitary blank device, the device performs domain creation with a registrar. Alternatively or additionally, a device may perform Domain initialization or creation in a stand-alone fashion. Un-registered devices may be constrained to limited functionality within the pnet (although Remote Join operations may be provided, as well). Two blank devices discovering each other may use a registrar, or perform domain initialization or creation in a stand-alone fashion. Blank devices discovering an existing domain offer to join the domain with help of a local service (e.g., domain controller) or a remote service (e.g., an externally managed domain).

Remote join operations are permissible with a Registrar, in which a blank Device may join a remote, e.g., parallel domain (e.g., separate LANs, connected via WAN). Domains may also be joined, with a registrar, by invitation as domain member. A blank device, with a registrar, may join a remote domain by invitation from the "home" domain. A device, with a Registrar, may join a remote domain as temporal guest by invitation from the "hosting" domain. In the event that a device discovers multiple domains, it may offer its user a choice of joining one of the discovered domains.

Where devices have been offline or disconnected, but not removed from a domain, it may by default re-connect to the last domain of which it has been a member, once this domain becomes available again. Where a Device is permanently removed from a domain, access to all content bound to the domain may be revoked to the removed device. Content bound to the device however may remain accessible thereto, if not explicitly revoked.

Domains and devices therein may be renamed. Domains may be merged (e.g., married), in which content from both domains may be made available in the new domain, as when a domain member marries a user, who joins the domain. Domains may be split into separate Domains, in which content that is bound to the domain shall be separated so that it is only available in only one of the split domains, as when a domain member separates from a domain family, as in a divorce. Where allowed content within a domain may conform to particular formats, the domain may function to import only content in formats other than the domain formats if no rights are detected. To this extent, a domain may import only content which is un-encrypted. Embodiments may also function with digital watermarking and/or media fingerprinting to examine imported content, and transcryption and trans-control from other DRM systems may be supported.

Domains may export content in other formats than those of the domain formats as the rights bound to the content may provide and embodiments may support exporting content to other protection schema. User generated content can be protected with the domain and key hierarchy and encrypted with a domain or user secret. A domain may constrain or restrict access or use of content with no detectable rights or rights that are detected to be corrupted. Embodiments may function with secure stream encapsulation and link-level encryption. Transport layer communication with respect to secret exchanges within the domain may be based on SSL/Socks, HTTP-S or other secure protocols.

Link-layer encryption may be supported, in which the content license includes fields to trigger link layer encryption or interface protection such as HDCP and "Macrovision." Other link layer encryption schema such as DTCP/IP may be transparent within the domain.

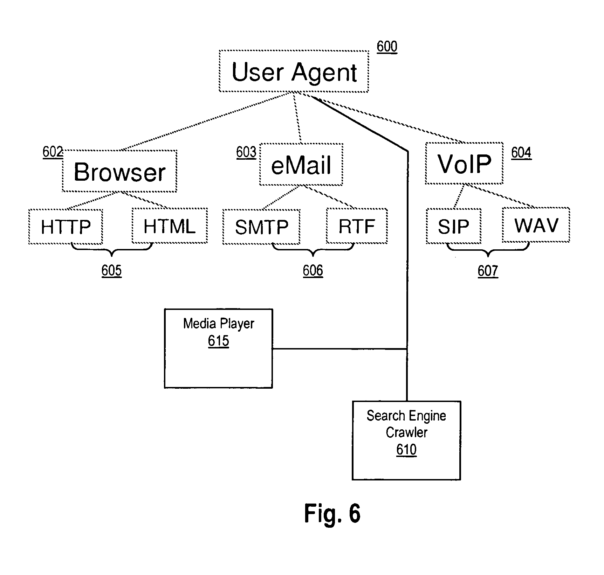

FIG. 6 depicts example user agent 600, according to an embodiment of the present invention. As used herein, the term user agent (UA) may refer to software that retrieves and renders Web content for users. Server agent 600 may include Web browsers, media players, plug-ins, and other programs that help in retrieving and rendering Web content. UA 600 comprises a client application, a server application, and a particular protocol. The applications provide functional capability for the UA. The protocol functions as a language, with which the applications may to communicate. UA 600 may thus include web browser 601, e-mail client 602, a search engine crawler 610 and a VoIP application 603.

An embodiment functions with user agent 600 disposed, deployed or operational in CE devices that may interconnect with a pnet domain, which provides an application and protocols to allow the CE to participate within the internet. A UA application may provide browser-like functionality, support browser technologies (e.g., JS, CSS, XHTML) while operational with a typical or other CE usage paradigm. Domain UA 600 thus may support several protocols, such as HTTP and HTML 605 for browser 602, RTF and STMP 606 for email application 603, and/or SIP and WAV 607 for VoIP application 604. Embodiments are extensible in relation to applications and protocols with which they may function.

The network paradigm of the internet, e.g., the pnet, with a concept of "dumb networks, smart nodes" allows rapid information exchange, in a sense, because the networks "don't care what information they carry, and the network infrastructure (e.g., because of its ambivalence to the content) is extensible and upgradeable to support increase in data traffic without requiring any change in the code used by internet applications.

In an embodiment, domains may use UA 600 to encapsulate functionality and communication at endpoints, with the network of the pnet domain connecting sub-domain nodes therein. For example, web browser 602 renders content from a web server, but the networks that exist between the server and PC are neutral with respect to the content that they carry. UA 600 includes one or more server applications that publish data that is requested by a client, one or more client applications that renders received data for specific functions, and one or more common or other protocols for exchanging data.

Each protocol defines the rules governing the syntax, semantics, and synchronization of communication between two computing endpoints. Different protocols have been developed to support the different needs of applications - for example, for text-based web pages, HTTP provides a robust mechanism that provides recovery from lost packets, at a cost of slower performance. RTP provides streaming capability for AN and may be configured to ignore lost packets, but may provide substantially higher performance than HTTP in some cases. SIP may be used with low-latency, full-duplex streaming between peers.

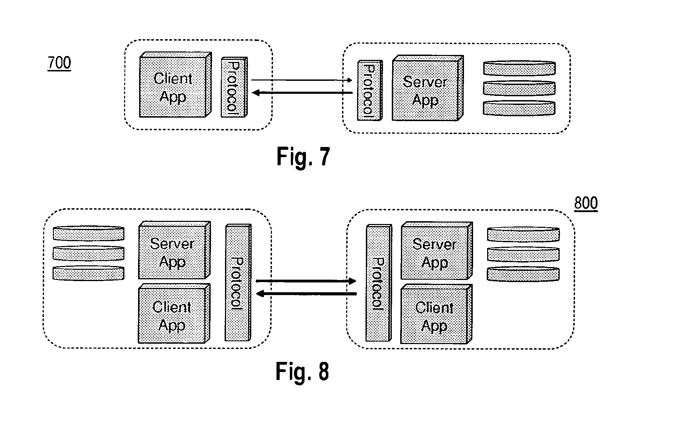

FIG. 7 and FIG. 8 respectively depict other example user agent 700 and UA 800, according to an embodiment of the present invention. Server and client applications with which an embodiment may implement UA 600 include Web server/browsers 602 (e.g., Apache/Explorer), Media Server/Player 615 (e.g., Real Server/Player), and VoIP clients (e.g., Skype). These applications provide the specific functionality to the end user (or device). They define tasks that are ultimately to be performed with the agent. UA 700 and UA 800 split their functionality into two segments, client and server, for convenience. An embodiment functions as though, in a sense, there is a single application functionality, essentially disposed, deployed or operational over two end points of the network.

In an embodiment, a UA may function as a platform for CE to co-exist with PC and other computer systems, may function on a web browser or similar model. Browser modeled UAs leverage the substantial base of content that exists on the web for the PC, and artisans skilled in arts relating to web developers typically are skilled to build web applications and services. A UA used with an embodiment may contrast somewhat with a web browser application dedicated for use with a PC. For example, they may have different user interface (UI) paradigms. CE devices may lack keyboards, mice and other peripherals and may have differing screen sizes and resolutions. Consumers expect CE devices to have control mechanisms such as touch screens and directional pads and button actuators (e.g., D-Pads). CE devices may be somewhat more inherently more media rich or focused. Many CE devices are largely media centric, especially audio and video players. CE devices are typically somewhat more device-integrated. For example, CE devices are generally single function; they do one thing, they do it very reliably, simply and intuitively. An embodiment may function with a Widget model that also may include a media player application., content and device control, and a UI paradigm. Software APIs may support a different user interface model, e.g., using D-pads, touch-screens and other technologies that are not mouse and keyboard based, as well as gesture recognition and biometrics.

An embodiment relates to the integration of an internet domain system (e.g., pnet 100; FIG. 1) with a key (e.g., PKI) system to provide a trusted innetworking system that is inherently transparent in use. In addition, the PKI hierarchy conforms, at least in part, to the network hierarchy, and thus derives certificates, including a secret key for the purpose of cryptographically binding content to any instance of the PKI or pnet hierarchy.

The pnet provides a consumer friendly naming scheme that allows for the simple identification and discovery of electronic media assets. The virtual location of nearly any resource is intuitively generated by an individual user, for example to get information relating to "Dolby Laboratories, Inc.," an effective web address may be "Dolby.com." The simplicity of the interface hides the inherent complexity of resolving physical location and the routing of communications to those resources. IP addresses and MAC addresses are essentially hidden to the user and any software applications in typical operation; a URL or URI may simply be used, and the system resolves connectivity transparently to the user.

An embodiment uses a similar domain naming scheme for connecting consumer electronics devices to pnet resources and between devices interconnected therewith, as described, a top-level domain is established (e.g., jones.net), and people and devices are instantiated as sub-domains thereof. Sub-domains are hierarchically related to the top-level domain. For example the Jones family television may the address tv.jones.net, or Tom Jones' mp3 player could have the address mp3.tom.jones.net. Thus, these domains are easily derived and browsed like the internet.

The domain concept is inherently simple to use. However, security is a significant consideration. In an embodiment, a key system provides for authentication of source or destination, or any node in a hierarchy. By default, authorization components are typically unavailable in conventional domain infrastructure. In relation to content protection, as well as security of the network devices interconnected therewith, an embodiment functions with robust security.

Key systems such as PKI instantiates a hierarchy that includes member institutions and users. The institutions enforce a degree of authentication as a trust tree is built, which provides a chain of trust from the highest to the lowest level. Typical PKI systems may employ hand carried digital certificates to member institutions, deliverable upon the institution providing physical proof that they are identifiable as who they say they are, before installing, the certificate into their system. These members may require lower level members in the hierarchy to provide secure identification, as well. Users may be required to provide PIN codes and/or other personal information to substantiate their identity. Thus, a PKI system confirms identity by consulting commonly trusted parent "nodes" and the hierarchy can be navigated to find those nodes. Thus, a hierarchical PKI based system has a significant inherent degree of security.

PKI and other conventional key systems however achieve their extraordinary security with a relatively complex user model. For example, their essentially manual authentication requirements are impractical without significant user involvement or expensive managed services. Certificates must be "handled," and there is no standardized way of communicating identity and receiving authentication.

An embodiment combines the pnet hierarchy with an essentially conforming key hierarchy in a single functional internetworking domain and key system. A user experience component utilizes the domain system for identity and navigation with a key, e.g., PKI, system that maintains trust throughout the system. An embodiment couples the pnet domain hierarchy to a PKI or other key certificate hierarchy. Thus, the infrastructure remains trusted through the domain key hierarchy. The domain system provides a naming system that allows both identity and location to be resolved, while the PKI or other key system establishes robust trust within the pnet domain without significant user involvement.

A PKI or other key system CA is established at the top of the hybrid hierarchy, which functions as the starting point of the trust chain, and represents the highest level of trust available throughout the hierarchy. The instantiation of this top-level node is an RC. An embodiment associates this CA with a top-level domain name in the pnet. Domain names can be resolved to locations within a network or internet. Thus, that domain name can be used to access the CA and confirm identity. The linking of the URL to a certificate and authentication allow a simple domain node name to represent location, identity and trust level.

The CA generates child certificates. Since child certificates are derived from a parent certificate such as the RC, the relationship between pnet nodes can be verified via the CA. In an embodiment, each of the "child" certificates would be associated with a sub-domain. These sub-domains have some inherent level of trust because they are members of the parent domain, but when integrated with the key hierarchy, an embodiment increases the trust level significantly, because their relationship can be substantiated through the parent top-level domain utilizing the key infrastructure. Each sub-domain has a certificate and an authentication engine, which allows subsequent children to this level can be found and authenticated. The hierarchy is extensible, essentially without limit. For example, the next level of the hierarchy may be device related.

The trust level at any point in the key hierarchy is directly related to the level of authentication that is utilized when handing over child certificates. To keep the highest level of trust throughout the system, the highest level of authentication must be used. The domain system functions to promote high level authentication by providing the address of the parent, and can be followed up all the way to the RC of the CA. Additionally, each node can institute its own authentication. For example, devices could institute password or biometric authentication to an end-user to ensure trust.

In an embodiment, content is persistently cryptographically protected. The encryption keys are derived from a key source and embedded in a content license. This license is in terms protected by a secret derived from the PKI hierarchy, representing a single node or multiple nodes of similar or lower position in the hierarchy to which content is intended to be accessible.

In an embodiment, the domain key system uses a multi-way parallel PKI certificate hierarchy, interlinked with each other. Any given certificate of all hierarchies contains both public and private elements, as well as other, trusted and un-trusted elements. While traversing the domain hierarchy from the RC authority to an end-point, or vice versa, trust and authenticity can be verified. Traversing between the parallel PKI hierarchies provides protection and integrity of certificates. Embodiments may use a variety of certificates, associated for example with devices, domains, content, and applications.

Root Certification Authority: Verification is provided from all certificates within a domain ultimately originating from a singe RC authority. In generating subsequent certificates (e.g., at relatively lower trust levels), downstream devices or entities may have the ability to generate child certificates.

Device Certificates: Originating from the RC CA, with the possibility to grant device manufacturers the ability to create device certificates of their own, the device certificate contains a public and a private part. The device certificate also contains trusted and verifiable elements that identify device functionality. This functionality may be used to monitor device manufacturer production of licensed devices. Based on these maufacturer certificates, individual devices or even manufactures can be revoked in case of security breaches based on the certificate. The initial device certificate is stored on a member device to robustly preserve the integrity, authenticity and confidentiality of the respective certificate elements.

Domain Certificates: Initially issued by the Root CA, a pnet domain certificate is issued by a domain registrar. A single virgin EMA Device may request a domain certificate from a registrar or in the (e.g., unlikely) event of a non-registered domain deriving a certificate on its own merits. The integrity, authenticity and confidentiality of the domain certificate elements are ensured with the initial device certificate (as does potential certificate revocation).

Domain membership may established by sharing the public part of the domain certificate. Such sharing may involve a process with user interaction. Prior to joining a pnet domain, devices identify themselves by the means of their domain device certificates. Based on the certificate hierarchy, the domain controller may verify the device certificate, and compare a questionable device against, e.g., a white or black-list; failure to obtain such lists may result in a refusal of the join request.

Sharing only the public part of the domain certificate ensures that only devices having the role of pnet domain Controllers can assume this role. With the ability to delegate and share the domain controller role amongst multiple devices, with sharing of the private elements of the domain certificate, the internetworking domain and key system is resilience against faulty or inactive devices.

Domain Members: Each and every device of the pnet domain is identified by its ability to share the public part of the domain certificate. Integrity and authenticity of the domain certificate is protected by the individual device certificate.

Domain Virtual Persons: A pnet domain virtual certificate issued by the pnet domain controller to individual persons within the pnet Domain. In addition to sharing the public elements of the domain certificate, a person may be identified as a member of a particular domain by their user credentials. User credentials may be defined with OpenID, or a user name and password scheme. Issued by the pnet domain controller, a personal certificate is derived. Integrity amd authenticity of the user certificate is protected by the individual device certificate, and access to it is protected by user credentials. Individual access may be revoked by the domain controller.

Personal Devices: Personal device certificates denote devices that are registered within a domain associated to an individual. Personal device certificates share access to the public part of a particular person's public certificate, and may gain access to user credentials, which are protected by the means of OpenID, or a user name and password scheme. Issued by the pnet domain controller, the integrity and authenticity of the personal device certificate is protected by the individual device certificate and access to it is protected by user credentials.

Content Certificate: Content Certificates are issued by the root CA to content providers and distributors. In the event of domain licensing of content, individual devices, sharing both the private and public part the domain content certificate may negotiate the encryption key with a content provider to request the issuing of a pnet domain-wide content license. The integrity, secrecy, and authenticity of the content certificate are protected by the individual device certificate.

Application Certificate: An application certificate is issued by the root CA to application providers and distributors. The application certificate allows the unique tracking, and verification of origin of any pnet domain application. Based on trust for any given application, access to device resources may be granted. The origin of any application can be verified based on the shared root CA.

An embodiment of the present invention may thus relate to one or more of the example embodiments enumerated below.

1. A System according to claim 1 and claims 2-16, dependent on claim 1.

A method, comprising performing or executing one or more operational features of a system as recited in one or more of claims 1-16.

A computer readable storage medium comprising instructions which, when executed with one or more processors:
cause the processors to perform or execute a method as recited in enumerated example embodiment 17.

### V.

### EQUIVALENTS, EXTENSIONS, ALTERNATIVES AND MISCELLANEOUS

Example embodiments for internetworking devices are thus described. In the foregoing specification, embodiments of the present invention have been described with reference to numerous specific details that may vary from implementation to implementation. Thus, the sole and exclusive indicator of what is the invention, and is intended by the applicants to be the invention, is the set of claims that issue from this application, in the specific form in which such claims issue, including any subsequent correction. Any definitions expressly set forth herein for terms contained in such claims shall govern the meaning of such terms as used in the claims. Hence, no limitation, element, property, feature, advantage or attribute that is not expressly recited in a claim should limit the scope of such claim in any way. The specification and drawings are, accordingly, to be regarded in an illustrative rather than a restrictive sense.

## Claims

1. A system, comprising:
a dynamic naming service component (111) that functions privately in relation to a group of client devices (102,103,104,105,109), which are each associated with a unique universal resource locator (117) maintained with the dynamic naming service component (111) that privately identifies the client devices within the group;
wherein the universal resource locator further identifies a hierarchy of private domains that is enforced within the group and which, at least implicitly, represents private relationships therein between the client devices;
wherein network rules are applied over the group based on one or more of the private relationships or the private domains;
wherein each of the client devices is securely and uniquely identified within the group based on a device certificate, the device certificate comprising elements that identify client device functionality; and
a content sharing service component that functions with the dynamic naming service component to allow at least a first of the client devices within the group to access information content stored on at least a second of the client devices based, at least in part, on the unique universal resource locator of the at least a second of the client devices.

2. The system as recited in Claim 1 wherein the system comprises a private inter-network that functions according to a protocol that is at least substantially similar to the Internet Protocol.

3. The system as recited in Claim 1 wherein the group is securely accessible to the client devices (105) from a network that is external to the group; and/or
wherein each client device of the group is freely accessible to each of the other client devices from within the group; and/or
wherein the content associated with each of the devices is freely transferable between each of the devices of the group.

4. The system as recited in Claim 1 therein the universal resource locator further identifies the information content associated with each of the client devices of the group; or
wherein the universal resource locator further identifies the information content associated with each of the client devices of the group, and the content sharing component functions to designate one or more of the second client device and the information content associated therewith according to the universal resource locators corresponding respectively thereto.

5. The system as recited in Claim 1 wherein content associated with each of the devices that is privately generated with respect to the group is freely transferable between each of the devices of the group; and
wherein content that is generated other than privately with respect to the group devices is transferable within the group according to content access rules associated therewith.

6. The system as recited in Claim 5 wherein transfer of content that is generated other than privately with respect to the group devices is transferable from within the group to an entity external thereto according to the content access rules associated therewith; or
wherein transfer of content that is generated other than privately with respect to the group devices from within the group to an entity external thereto is impeded.

7. The system as recited in Claim 1 wherein the universal resource locators comprise at least a private top-level domain; or
wherein the universal resource locators comprise at least a private top-level domain, and wherein a domain code, uniquely corresponding to the group, is generated based on the private top-level domain; or
wherein the universal resource locators comprise at least a private top-level domain, wherein a domain code, uniquely corresponding to the group, is generated based on the private top-level domain, and wherein the domain code is generated upon creating the private top-level domain.

8. The system as recited in Claim 1 wherein the universal resource locators comprise at least a private top-level domain, and wherein one or more of the universal resource locators further comprise at least one of:
an identifier that each uniquely identifies a sub-domain of the private top-level domain;
an identifier that each uniquely identifies one of the group devices; or
an identifier that each uniquely identifies information content associated with one of the group devices.

9. The system as recited in Claim 7 or Claim 8 wherein one or more of the private top-level domains or the sub-domains implies a familial relationship within the group.

10. The system as recited in Claim 7 wherein a domain code, uniquely corresponding to the group is generated based on the private top-label domain, and: wherein the domain code uniquely represents the group, and wherein the group may be accessed by a group device from a physical or logical location that is other than proximate to a location associated with the group, based on the domain code; or
wherein the domain code uniquely represents the group, wherein the group may be accessed by a group device from a physical or logical location that is other than proximate to a location associated with the group, based on the domain code, and wherein a device code is generated for each of the devices of the group.

11. The system as recited in Claim 10 wherein the device codes associated with each of the group devices is generated upon initialization thereof; or
wherein the domain code and the device codes respectively corresponding to each of the devices function to uniquely represent each of the group devices from a global perspective.

12. The system as recited in Claim 11 wherein the domain code is exposed to the global internet;
wherein the private dynamic naming service component dynamically tracks an Internet Protocol address associated with the domain code; and
wherein each of the device codes is hidden from the global internet.

13. The system as recited in Claim 1, further comprising:
a key based domain certificate authority that functions within each of the private domains to generate a digital certificate that uniquely corresponds to each of the respective domains;
wherein a trust level is associated with each of the domains that corresponds to a priority of the digital certificate with respect to the enforced domain hierarchy;
wherein one or more of the network rules and the private relationships relate to one or more of the digital certificate thereof;
wherein the trust level is enforceable and verifiable within the private domain hierarchy; and
wherein the trust level is reinforceable with a second certificate that is generated by a trusted node in a second network domain and, upon reinforcing from the second network trusted node, extensible within the hierarchical domain based on one or more of the network rules and the private relationships.

14. The system as recited in Claim 13 wherein the universal resource locators comprise at least a private top-level domain; or
wherein the universal resource locators comprise at least a private top-level domain, and wherein the key based certificate authority generates a digital certificate, namely a root domain certificate, that corresponds to the private top-level domain.

15. The system as recited in Claim 14 wherein each hierarchical domain level comprises a parent domain in relation to one or more sub-domains, with each comprise a child domain of the parent domain; or
wherein each hierarchical domain level comprises a parent domain in relation to one or more sub-domains, with each comprise a child domain of the parent domain, wherein the key based certificate authority generates a unique child digital certificate for each child sub-domain, and wherein a trust level associated with each child sub-domain is established based, at least in part, on the trust level associated with the digital certificate of the parent domain.

16. The system as recited in Claim 13 wherein the second network domain comprises a second hierarchical network domain that has one or more trusted nodes therein, and which is associated with at least one of a manufacturer of a device that is interconnectable with one or more second devices with the first private domain or a second network in which a user of the first private domain networks is located; and
wherein the trust level associated with the digital certificate that is associated with the interconnectable device is based, at least in part, on reinforcement from at least one of the trusted nodes of the second hierarchical domain; and
wherein the content processing component functions, at least in part, on the basis of the digital certificate that is associated with the interconnectable device.

17. A method, comprising performing or executing the operational features of a system as recited in one or more of Claims 1-16.

18. A computer readable storage medium comprising instructions which, when executed with one or more processors:
cause the processors to perform or execute a method as recited in Claim 17.

## Patentansprüche

1. System, umfassend:
eine Komponente (111) des Dynamic Naming Service, die privat in Bezug auf eine Gruppe von Client-Einrichtungen (102, 103, 104, 105, 109) fungiert, die jeweils mit einem eindeutigen Universal Resource Locator (117) assoziiert sind, die mit der Komponente (111) des Dynamic Naming Service geführt wird, wodurch die Client-Einrichtungen in der Gruppe privat identifiziert werden;
wobei der Universal Resource Locator ferner eine Hierarchie von privaten Domänen identifiziert, die innerhalb der Gruppe durchgesetzt wird und die mindestens implizit private Beziehungen darin zwischen den Client-Einrichtungen repräsentiert;
wobei über die Gruppe hinweg auf der Basis einer oder mehrerer der privaten Beziehungen oder der privaten Domänen Netzwerkregeln angewandt werden;
wobei jede der Client-Einrichtungen innerhalb der Gruppe auf der Basis eines Einrichtungszertifikats sicher und eindeutig identifiziert wird, wobei das Einrichtungszertifikat Elemente umfasst, die Client-Einrichtungsfunktionalität identifizieren; und
eine Inhaltsteilungsdienstkomponente, die mit der Komponente des Dynamic Naming Service fungiert, um es mindestens einer ersten der Client-Einrichtungen innerhalb der Gruppe zu erlauben, auf Informationsinhalt, der auf mindestens einer zweiten der Client-Einrichtungen gespeichert ist, mindestens teilweise auf der Basis des eindeutigen Universal Resource Locator der mindestens einen zweiten der Client-Einrichtungen zuzugreifen.

2. System nach Anspruch 1, wobei das System ein privates Inter-Netzwerk umfasst, das gemäß einem Protokoll fungiert, das mindestens im Wesentlichen dem Internetprotokoll ähnlich ist.

3. System nach Anspruch 1, wobei die Gruppe den Client-Einrichtungen (105) von einem Netzwerk aus, das außerhalb der Gruppe ist, sicher zugänglich ist; und/oder
wobei jede Client-Einrichtung der Gruppe jeder der anderen Client-Einrichtungen von innerhalb der Gruppe heraus frei zugänglich ist; und/oder
wobei der mit jeder der Einrichtungen assoziierte Inhalt frei zwischen jeden der Einrichtungen der Gruppe transferierbar ist.

4. System nach Anspruch 1, wobei der Universal Resource Locator ferner den mit jeder der Client-Einrichtungen der Gruppe assoziierten Informationsinhalt identifiziert; oder
wobei der Universal Resource Locator ferner den mit jeder der Client-Einrichtungen der Gruppe assoziierten Informationsinhalt identifiziert und die Inhaltsteilungskomponente fungiert, um die zweite Client-Einrichtung und/oder den damit assoziierten Informationsinhalt gemäß den jeweils diesen entsprechenden Universal Recource Locators zu designieren.

5. System nach Anspruch 1, wobei mit jeder der Einrichtungen assoziierter Inhalt, der privat mit Bezug auf die Gruppe erzeugt wird, frei zwischen jeder der Einrichtungen der Gruppe transferierbar ist; und
wobei Inhalt, der auf andere Weise als privat mit Bezug auf die Gruppeneinrichtungen erzeugt wird, innerhalb der Gruppe gemäß damit assoziierten Inhaltszugangsregeln transferierbar ist.

6. System nach Anspruch 5, wobei Transfer von Inhalt, der auf andere Weise als privat mit Bezug auf die Gruppeneinrichtungen erzeugt wird, gemäß den damit assoziierten Inhaltszugangsregeln von innerhalb der Gruppe aus zu einer dazu externen Entität transferierbar ist; oder
wobei Transfer von Inhalt, der auf andere Weise als privat mit Bezug auf die Gruppeneinrichtungen erzeugt wird, von innerhalb der Gruppe zu einer dazu externen Entität gehemmt wird.

7. System nach Anspruch 1, wobei die Universal Resource Locators mindestens eine private Top-Level-Domäne umfassen; oder
wobei die Universal Resource Locators mindestens eine private Top-Level-Domäne umfassen und wobei ein der Gruppe eindeutig entsprechender Domänencode auf der Basis der privaten Top-Level-Domäne erzeugt wird; oder
wobei die Universal Resource Locators mindestens eine private Top-Level-Domäne umfassen, wobei ein eindeutig der Gruppe entsprechender Domänencode auf der Basis der privaten Top-Level-Domäne erzeugt wird und wobei der Domänencode bei Erstellung der privaten Top-Level-Domäne erzeugt wird.

8. System nach Anspruch 1, wobei die Universal Resource Locators mindestens eine private Top-Level-Domäne umfassen und wobei ein oder mehrere der Universal Resource Locators ferner mindestens eine der folgenden Alternativen umfassen:
eine Kennung, die jeweils eine Subdomäne der privaten Top-Level-Domäne eindeutig identifiziert;
eine Kennung, die jeweils eine der Gruppeneinrichtungen eindeutig identifiziert; oder
eine Kennung, die jeweils mit einer der Gruppeneinrichtungen assoziierten Informationsinhalt eindeutig identifiziert.

9. System nach Anspruch 7 oder Anspruch 8, wobei eine oder mehrere der privaten Top-Level-Domänen oder der Subdomänen eine familiäre Beziehung innerhalb der Gruppe implizieren.

10. System nach Anspruch 7, wobei ein eindeutig der Gruppe entsprechender Domänencode auf der Basis der privaten Top-Level-Domäne erzeugt wird und wobei der Domänencode die Gruppe eindeutig repräsentiert und wobei auf die Gruppe auf der Basis des Domänencodes durch eine Gruppeneinrichtung von einem physikalischen oder logischen Ort aus, der einem mit der Gruppe assoziierten Ort nicht nahe ist, zugegriffen werden kann; oder
wobei der Domänencode die Gruppe eindeutig repräsentiert, wobei auf die Gruppe auf der Basis des Domänencodes durch eine Gruppeneinrichtung von einem physikalischen oder logischen Ort aus, der nicht einem mit der Gruppe assoziierten Ort nahe ist, zugegriffen werden kann und wobei für jede der Einrichtungen der Gruppe ein Einrichtungscode erzeugt wird.

11. System nach Anspruch 10, wobei die mit jeder der Gruppeneinrichtungen assoziierten Einrichtungscodes bei der Initialisierung davon erzeugt wird; oder
wobei der Domänencode und die Einrichtungscodes jeweils der Funktion jeder der Einrichtungen entsprechen, um jede der Gruppeneinrichtungen von einer globalen Perspektive aus eindeutig zu repräsentieren.

12. System nach Anspruch 11, wobei der Domänencode dem globalen Internet ausgesetzt wird;
wobei die private Komponente des Dynamic Naming Service eine mit dem Domänencode assoziierte Internetprotokoll-Adresse dynamisch verfolgt; und
wobei jeder der Einrichtungscodes vor dem globalen Internet verborgen wird.

13. System nach Anspruch 1, ferner umfassend:
eine auf Schlüsseln basierende Domänenzertifikatautorität, die innerhalb jeder der privaten Domänen fungiert, um ein digitales Zertifikat zu erzeugen, das jeder der jeweiligen Domänen eindeutig entspricht;
wobei mit jeder der Domänen ein Vertrauensniveau assoziiert ist, das einer Priorität des digitalen Zertifikats mit Bezug auf die durchgesetzte Domänenhierarchie entspricht;
wobei eine oder mehrere der Netzwerkregeln und privaten Beziehungen ein oder mehrere der digitalen Zertifikate davon betreffen;
wobei das Vertrauensniveau innerhalb der privaten Domänenhierarchie durchsetzbar und verifizierbar ist; und
wobei das Vertrauensniveau mit einem zweiten Zertifikat, das durch einen vertrauenswürdigen Knoten in einer zweiten Netzwerkdomäne erzeugt wird, verstärkbar und bei Verstärkung von dem vertrauenswürdigen Knoten des zweiten Netzwerks aus auf der Basis einer oder mehrerer der Netzwerkregeln und der privaten Beziehungen innerhalb der hierarchischen Domäne erweiterbar ist.

14. System nach Anspruch 13, wobei die Universal Resource Locators mindestens eine private Top-Level-Domäne umfassen; oder
wobei die Universal Resource Locators mindestens eine private Top-Level-Domäne umfassen und wobei die auf Schlüsseln basierende Zertifikatautorität ein digitales Zertifikat erzeugt, nämlich ein Wurzeldomänenzertifikat, das der privaten Top-Level-Domäne entspricht.

15. System nach Anspruch 14, wobei jedes hierarchische Domänenniveau eine übergeordnete Domäne in Bezug auf eine oder mehrere Subdomänen umfasst, die jeweils eine untergeordnete Domäne der übergeordneten Domäne umfassen; oder
wobei jedes hierarchische Domänenniveau eine übergeordnete Domäne in Bezug auf eine oder mehrere Subdomänen umfasst, die jeweils eine untergeordnete Domäne der übergeordneten Domäne umfassen, wobei die auf Schlüsseln basierende Zertifikatautorität für jede untergeordnete Subdomäne ein eindeutiges untergeordnetes digitales Zertifikat erzeugt und wobei ein mit jeder untergeordneten Subdomäne assoziiertes Vertrauensniveau mindestens teilweise auf der Basis des mit dem digitalen Zertifikat der übergeordneten Domäne assoziierten Vertrauensniveaus festgelegt wird.

16. System nach Anspruch 13, wobei die zweite Netzwerkdomäne eine zweite hierarchische Netzwerkdomäne umfasst, die einen oder mehrere vertrauenswürdige Knoten darin aufweist und die mit einem Hersteller einer Einrichtung, die mit einer oder mehreren zweiten Einrichtungen mit der ersten privaten Domäne verbindbar ist, und/oder einem zweiten Netzwerk, in dem sich ein Benutzer der ersten Privatdomänennetzwerke befindet, assoziiert ist; und
wobei das Vertrauensniveau, das mit dem digitalen Zertifikat assoziiert ist, das mit der verbindbaren Einrichtung assoziiert ist, mindestens teilweise auf Verstärkung von mindestens einem der vertrauenswürdigen Knoten der zweiten hierarchischen Domäne basiert; und
wobei die Inhaltsverarbeitungskomponente mindestens teilweise auf der Basis des digitalen Zertifikats fungiert, das mit der verbindbaren Einrichtung assoziiert ist.

17. Verfahren, das das Durchführen oder Ausführen der operationalen Merkmale eines Systems nach einem oder mehreren der Ansprüche 1-16 umfasst.

18. Computerlesbares Speichermedium, das Anweisungen umfasst, die, wenn sie mit einem oder mehreren Prozessoren ausgeführt werden, bewirken, dass die Prozessoren ein Verfahren nach Anspruch 17 durchführen oder ausführen.

## Revendications

1. Système, comprenant :
un composant de service de nommage dynamique (111) qui fonctionne de manière privée en relation avec un groupe de dispositifs clients (102, 103, 104, 105, 109) qui sont chacun associés à une adresse internet universelle unique (117) maintenue à jour avec le composant de service de nommage dynamique (111) qui identifie de manière privée les dispositifs clients au sein du groupe ;
dans lequel l'adresse internet universelle identifie en outre une hiérarchie de domaines privés qui est appliquée au sein du groupe et qui représente, au moins implicitement, des relations privées dans celui-ci entre les dispositifs clients ;
dans lequel des règles de réseau sont appliquées au groupe sur la base d'un ou plusieurs des relations privée ou des domaines privés ;
dans lequel chacun des dispositifs clients est identifié de manière sécurisée et unique au sein du groupe sur la base d'un certificat de dispositif, le certificat de dispositif comprenant des éléments qui identifient une fonctionnalité du dispositif client ; et
un composant de service de partage de contenu qui fonctionne avec le composant de service de nommage dynamique pour permettre à au moins un premier des dispositifs clients du groupe d'accéder à un contenu d'informations stocké sur au moins un second des dispositifs clients sur la base, au moins en partie, de l'adresse internet universelle de l'au moins un second des dispositifs clients.

2. Système selon la revendication 1, dans lequel le système comprend un inter-réseau privé fonctionnant conformément à un protocole qui est au moins sensiblement semblable au Protocole Internet.

3. Système selon la revendication 1, dans lequel le groupe est accessible de manière sécurisée aux dispositifs clients (105) depuis un réseau qui est extérieur au groupe ; et/ou
dans lequel chaque dispositif client du groupe est librement accessible à chacun des autres dispositifs clients depuis l'intérieur du groupe ; et/ou dans lequel le contenu associé à chacun des dispositifs peut être librement transféré entre chacun des dispositifs du groupe.

4. Système selon la revendication 1, dans lequel l'adresse internet universelle identifie en outre le contenu d'informations associé à chacun des dispositifs clients du groupe ; ou
dans lequel l'adresse internet universelle identifie en outre le contenu d'informations associé à chacun des dispositifs clients du groupe, et le composant de partage de contenu a pour fonction de désigner un ou plusieurs des seconds dispositifs clients et du contenu d'informations associé à celui-ci conformément aux adresses internet universelles qui leur correspondent respectivement.

5. Système selon la revendication 1, dans lequel le contenu associé à chacun des dispositifs qui est généré de manière privée par rapport au groupe peut être librement transféré entre chacun des dispositifs du groupe ; et
dans lequel le contenu qui est généré d'une manière autre que privée par rapport aux dispositifs du groupe peut être transféré au sein du groupe conformément à des règles d'accès aux contenus qui leur sont associées.

6. Système selon la revendication 5, dans lequel le transfert d'un contenu qui est généré d'une manière autre que privée par rapport aux dispositifs du groupe peut être transféré depuis l'intérieur du groupe vers une entité extérieure à celui-ci conformément à des règles d'accès aux contenus qui leur sont associées ;
ou
dans lequel le transfert d'un contenu qui est généré d'une manière autre que privée par rapport aux dispositifs du groupe depuis l'intérieur du groupe vers une entité extérieure à celui-ci est inhibé.

7. Système selon la revendication 1, dans lequel les adresses internet universelles comprennent au moins un domaine privé de niveau supérieur ; ou
dans lequel les adresses internet universelles comprennent au moins un domaine privé de niveau supérieur et dans lequel un code de domaine, correspondant de manière unique au groupe, est généré sur la base du domaine privé de niveau supérieur ; ou dans lequel les adresses internet universelles comprennent au moins un domaine privé de niveau supérieur, dans lequel un code de domaine, correspondant de manière unique au groupe, est généré sur la base du domaine privé de niveau supérieur, et dans lequel le code de domaine est généré lors de la création du domaine privé de niveau supérieur.

8. Système selon la revendication 1, dans lequel les adresses internet universelles comprennent au moins un domaine privé de niveau supérieur, et dans lequel une ou plusieurs des adresses internet universelles comprennent en outre au moins l'un :
d'un identifiant qui identifie respectivement de manière unique un sous-domaine du domaine privé de niveau supérieur ;
d'un identifiant qui identifie respectivement de manière unique l'un des dispositifs du groupe ; ou
d'un identifiant qui identifie respectivement de manière unique un contenu d'informations associé à l'un des dispositifs du groupe.

9. Système selon la revendication 7 ou la revendication 8, dans lequel un ou plusieurs des domaines privés de niveau supérieur ou des sous-domaines implique une relation familiale au sein du groupe.

10. Système selon la revendication 7, dans lequel un code de domaine, correspondant de manière unique au groupe, est généré sur la base du domaine privé de niveau supérieur, et :
dans lequel le code de domaine représente de manière unique le groupe, et dans lequel le groupe peut faire l'objet d'un accès par un dispositif du groupe depuis une position physique ou logique qui est autre qu'une position proche d'une position associée au groupe, sur la base du code de domaine ; ou
dans lequel le code de domaine représente de manière unique le groupe, le groupe pouvant faire l'objet d'un accès par un dispositif du groupe depuis une position physique ou logique qui est autre qu'une position proche de la position associée au groupe, sur la base du code de domaine, et dans lequel un code de dispositif est généré pour chacun des dispositifs du groupe.

11. Système selon la revendication 10, dans lequel les codes de dispositifs associés à chacun des dispositifs du groupe sont générés lors de leur initialisation ; ou
dans lequel le code de domaine et les codes de dispositifs correspondant respectivement à chacun des dispositifs ont pour fonction de représenter de manière unique chacun des dispositifs du groupe d'un point de vue global.

12. Système selon la revendication 11, dans lequel le code de domaine est exposé à l'internet global ; dans lequel le composant de service de nommage dynamique privé poursuit dynamiquement une adresse de Protocole Internet associée au code de domaine ; et dans lequel chacun des codes de dispositif est masqué vis-à-vis de l'internet global.

13. Système selon la revendication 1, comprenant en outre :
une autorité de certification de domaine à base de clé qui a pour fonction, au sein de chacun des domaines privés, de générer un certificat numérique qui correspond de manière unique à chacun des domaines respectifs ;
dans lequel un niveau de confiance est associé à chacun des domaines qui correspond à une priorité du certificat numérique par rapport à la hiérarchie de domaine appliquée ;
dans lequel une ou plusieurs des règles de réseau et des relations privées sont relatives à un ou plusieurs de leurs certificats numériques ;
dans lequel le niveau de confiance peut être appliqué et vérifié au sein de la hiérarchie de domaines privés ; et
dans lequel le niveau de confiance peut être réappliqué avec un second certificat qui est généré par un noeud de confiance dans un second domaine de réseau et, lors de la réapplication par le second noeud de réseau de confiance, celui-ci peut être étendu au sein du domaine hiérarchique sur la base d'une ou plusieurs des règles de réseau et des relations privées.

14. Système selon la revendication 13, dans lequel les adresses internet universelles comprennent au moins un domaine privé de niveau supérieur ; ou
dans lequel les adresses internet universelles comprennent au moins un domaine privé de niveau supérieur et dans lequel l'autorité de certification à base de clé génère un certificat numérique, à savoir un certificat de domaine racine, qui correspond au domaine privé de niveau supérieur.

15. Système selon la revendication 14, dans lequel chaque niveau de domaine hiérarchique comprend un domaine pair en relation avec un ou plusieurs sous-domaines qui comprennent chacun un domaine fils du domaine père ; ou
dans lequel chaque niveau de domaine hiérarchique comprend un domaine père en relation avec un ou plusieurs sous-domaines qui comprennent chacun un domaine fils du domaine père, dans lequel l'autorité de certification à base de clé génère un certificat numérique fils unique pour chaque sous-domaine fils, et dans lequel un niveau de confiance associé à chaque sous-domaine fils est établi sur la base, au moins en partie, du niveau de confiance associé au certificat numérique du domaine père.

16. Système selon la revendication 13, dans lequel le second domaine de réseau comprend un second domaine de réseau hiérarchique qui comporte un ou plusieurs noeuds de confiance et qui est associé à au moins un fabricant d'un dispositif pouvant être interconnecté à un ou plusieurs seconds dispositifs avec le premier domaine privé ou le second réseau dans lequel se trouve un utilisateur des premiers réseaux de domaines privés ; et
dans lequel le niveau de confiance associé au certificat numérique qui est associé au dispositif pouvant être interconnecté a pour base, au moins en partie, le fait d'être appliqué par au moins l'un des noeuds de confiance du second domaine hiérarchique ; et dans lequel le composant de traitement de contenu fonctionne, au moins en partie, sur la base du certificat numérique qui est associé au dispositif pouvant être interconnecté.

17. Procédé comprenant la mise en oeuvre ou l'exécution des caractéristiques fonctionnelles d'un système selon l'une ou plusieurs des revendications 1 à 16.

18. Support de stockage lisible par ordinateur comprenant des instructions qui, lorsqu'elles sont exécutées par un ou plusieurs processeurs :
font en sorte que les processeurs mettent en oeuvre ou exécutent un procédé selon la revendication 17.
